# EUROPEAN PATENT SPECIFICATION

(11) **EP 3 752 002 B1**
(45) Date of publication and mention of the grant of the patent: **22.06.2022**
(21) Application number: 19714878.6
(22) Date of filing: 11.02.2019
(51) Int. Cl.: A22C 13/02

(54) **SUPPORT FOR SUPPORTING A SHIRRED GUT CASING, KIT OF PARTS COMPRISING A SUPPORT MEMBER AND A STOP MEMBER, METHOD FOR ASSEMBLING THE SUPPORT, AND METHOD FOR TRANSFERRING A GUT FROM THE SUPPORT TO A STUFFING HORN**
TRÄGER ZUM TRAGEN EINER GERAFFTEN DARMHÜLLE, TEILESATZ UMFASSEND EINEN TRÄGER UND EIN STOPPELEMENT, VERFAHREN ZUM AUFBAUEN DES TRÄGERS UND VERFAHREN ZUM ÜBERTRAGEN EINEN DARM VOM TRÄGER ZUM FÜLLROHR
ÉLÉMENT DE SUPPORT POUR SUPPORTER UN BOYAU TUBULAIRE PLISÉ, ENSEMBLE DE PIÈCES COMPRENANT UN SUPPORT ET UN ÉLÉMENT D'ARRÊT, PROCÉDÉ POUR ASSEMBLER LE SUPPORT ET PROCÉDÉ POR TRASFÉRER UN BOYAU DU SUPPORT À UN TUYAU DE REMPLISSAGE

(30) Priority: 14.02.2018 NL 2020436
(43) Date of publication of application: 23.12.2020
(73) Proprietor: Van Hessen Holding B.V., 2913 LV Nieuwerkerk aan den IJssel (NL)
(72) Inventor: SCHOUTEN, Thomas Maarten, 1031 HV Amsterdam (NL)
(74) Representative: EP&C
(86) International application number: PCT/NL2019/050087
(87) International publication number: WO 2019/160407

(56) References cited:
- EP-A1- 0 565 282
- DE-U1-202017 101 504
- GB-A- 876 285
- US-A- 3 115 240

## Description

### FIELD OF THE INVENTION

The invention relates to the field of natural gut or intestines processing, and more specifically to a support for supporting one or more natural guts in a shirred condition, wherein the gut is to be used as a sausage casing. The support is used for transporting the gut from a gut room, where the gut is harvested from the entrails of a slaughtered animal such as a pig, cow or sheep, to a sausage production site, where the gut is transferred from the support to a stuffing horn of a sausage manufacturing machine to fill the gut with a meat or meat-like paste.

Different guts may be provided on the same support, either singly (separated from each other), or partly overlapping each other at respective ends.

### BACKGROUND OF THE INVENTION

Elongated supports, comprising sheaths or tubular members or pipes, for transporting guts in shirred condition are known in different variants. The different variants are all aimed at making a provision to prevent a gut or a part thereof from sliding off the support during transport and corresponding handling, such as packaging and unpackaging. In view of a desired smooth flow of sausage production, a gut at least partially slid from a support before an envisaged transfer of the gut from the support to a stuffing horn disadvantageously leads to loss of production time or loss of the gut altogether. A provision to prevent a gut or a part thereof from sliding off the support is a stopping provision at an end section, i.e. at or near an end, of the support.

For example, EP1961307 A1 discloses disk-shaped separators having a central through-hole, and provided on a carrier for separating two sausage casing sections on the carrier from each other. The reference also discloses stoppers being disk-shaped and having a central through-hole. The separators and stoppers are slid on the carrier. The separators and the stoppers exhibit a metallic material i.e. metallic particle, which includes metallic powder, metal grains or ferrous magnetic material. The separators and the stoppers are detectable by metal detectors.

As another example, DE 202008015404 U1 discloses stoppers made from resilient material (plastic or rubber) and resiliently held on a carrier member. The stopper is coloured or covered with a black colouring pigment being ferrous oxide powder.

With the supports according to said references, a risk exists that a stopper becomes separated from, i.e. slides off, the support, and may end up in a sausage. From a food safety view, this is highly undesirable, since a consumer might choke on the stopper. To prevent this situation from occurring, the sausages produced using supports according to said references are fed along a metal detector which may detect the metallic component of a stopper or separator inadvertently included in a sausage. Then, this sausage may be removed from production and discarded.

Many proposals have been made to provide an integral stopping function at the end sections of the support, not to have stoppers as loose parts. Examples of those proposals are found in EP 0971594 B1, DE 20009980 U1 and DE 202017101504 U1, wherein portions of the end sections of the support are bent and/or deformed to provide radially extendable stop elements.

GB 876 285 discloses that, for convenience in threading on a filling nozzle, a sausage skin is threaded on a cylindrical or tapered tube core provided with end stops, at least one of which is removable. The tube core or the bunched skin only can be placed on to the nozzle tip and the filling may then be done. One of the end stops may be secured in the core by having a projecting spigot which is a push-fit in the core.

The known integral stopping provisions at the end sections of the gut support have a great disadvantage of having to model the end sections, for example by providing long cuts, and locally weakening the material of the support. Furthermore, the stopping provision may rely on a snapping function which can easily be undone during handling or transport of the support with the gut(s) loaded on it. Also, (purposely) undoing the stopping provision when required to remove the gut(s) from the support may not provide a smooth surface for transfer of the gut(s) from the support to the stuffing horn of a sausage manufacturing machine. Guts may be damaged or torn during this transfer, due to e.g. underlapping of the gut on a relatively large hole in the support, or sharp edges of support material. Furthermore, the material weakenings may cause parts of the support to break off, with the risk of these parts ending up in a sausage. Since these supports are made from a plastic, non-metallic material, a detection of parts broken off in a sausage is practically impossible, with all the subsequent risks of food unsafety.

Thus, a need remains to provide an improved stopping provision at the end sections of the gut support.

### SUMMARY OF THE INVENTION

It would be desirable to provide an improved, or at least an alternative support for supporting a shirred gut casing. It would also be desirable to provide a support for supporting a shirred gut casing having an improved, or at least alternative stopping provision at the end sections of the gut support. It would also be desirable to provide a support for supporting a shirred gut casing where a risk of losing parts of the support is reduced or prevented. It would also be desirable to provide a support for supporting a shirred gut casing that can be handled easy, quickly and reliably in a sausage manufacturing plant while transferring a gut from the support to a stuffing horn.

To better address one or more of these concerns, in a first aspect of the invention a kit of parts for supporting a shirred gut casing is provided. The kit of parts comprises: a tubular support member having a longitudinal axis, and at least one end section having an open end, the end section being provided with two diametrically opposed holes; and a stop member being substantially strip-shaped, being made from a flexible resilient material, and comprising an elongate body portion having two opposite body end portions. The body portion may comprise a broadened central portion, whereby a width of the stop member at the central portion thereof is greater than a chord of a dimension of the holes in a tangential direction of the end section of the support member. Alternatively or additionally, the body portion may comprise a thickened central portion, whereby a thickness of the stop member at the central portion thereof is greater than a dimension of the holes in a longitudinal direction of the end section of the support member.

In a second aspect of the invention a support for supporting a shirred gut casing is provided. The support comprises a kit of parts of the invention, wherein each stop member is separate from the support member, and extends through both holes of the end section of the support member.

The support according to the invention comprises a stop member which is separate from the tubular support member. The strip-shaped stop member extends through both holes of the end section of the tubular support member, in particular transversely to the longitudinal axis of the support member, to create an obstacle for a gut end at diametrically opposite sides of the support member to make sliding off of a shirred gut casing from the support member impossible, where a height of each portion of the stop member extending from the outer surface of the stop member is selected to be sufficient for preventing the gut to pass the stop member.

The broadened and/or thickened central portion of the body portion of the stop member is located in the interior of the tubular support member, and under prevailing circumstances during use and transport of the support cannot pass through any one of the two diametrically opposed holes on the end section of the support member. Thus, the stop member is connected to the support member such that the stop member and the support member cannot become separated.

The material of the stop member is flexible and resilient, whereby the stop member and portions thereof, upon exerting a force on the stop member, can be bent to a certain degree, and when the force is released substantially retakes its original shape. The material of the stop member (as well as the material of the support member) may be a plastic material, such as polypropylene, PP, or polyethylene, PE, or may be a metallic material. Without a force acting on the stop member, the stop member has such a shape that the body end portions extend transversely with respect to the longitudinal axis of the support member.

It is noted that the holes in the end section of the support member substantially extend in a tangential direction of the support member. That is, a dimension of the hole as seen in a tangential direction of the support member is smaller than a dimension of the hole as seen in a longitudinal direction of the support member. As seen in this tangential direction, each hole extends between a first edge and a second edge. Thus, the hole dimension between the first edge and the second edge, as seen in the plane of the material of the support member, is greater than the distance as seen straight between the first edge and the second edge. Here, the distance as seen straight between the first edge and the second edge is defined as the chord of the dimension of the hole.

In an embodiment of the kit of parts or support, the stop member has a first side surface, wherein the body end portions of the stop member at the first side surface side each have a concave bent shape, as seen with respect to a bending line facing the first surface side, the bending line being parallel to a width direction of the stop member.

Thus, the body end portions, in particular the free ends thereof, are bent away from a general extension direction of the stop member, both in the same direction. This embodiment of the stop member is advantageous during assembly of the stop member and the support member. For this assembly, the stop member is bent or folded at its central portion, whereby the body end portions of the stop member are brought at a reduced distance from each other (when compared to their original positions) which allows them to be inserted into the tubular support member through an end opening thereof. The bending of the body end portions of the stop member is done such that the free ends of the body end portions diverge from one another. During insertion of the body end portions of the stop member into the support member, the diverging free ends are allowed to move along the inner surface of the support member. Once the free ends reach the holes in the end sections of the support member, they will enter into the holes. During further insertion of the bent stop member into the support member, the body end portions of the stop member will pass through the hole, and the stop member will take its original shape. The broadened and/or thickened central portion will lock the stop member in place, making it impossible for the stop member to move completely through any one of the holes, since the broadened and/or thickened central portion is unable to pass through the holes.

In an embodiment of the kit of parts or support, the central portion of the stop member at the first side surface side has a convex bent shape with respect to the bending line.

Advantageously, the convex bent shape predefines or promotes a preferred bending or folding direction of the stop member. In particular in combination with a concave bent shape of the body end portions, the convex bent shape promotes a correct bending or folding direction of the stop member at its central portion.

In an embodiment of the kit of parts or support, the broadened and/or thickened central portion of the stop member is formed by at least one transverse protrusion of the body portion.

The one or more transverse protrusions prevent the central portion of the stop member to pass from the interior of the support member through the holes of the end section of the support member. The protrusion may be integral with the stop member, or may be a separate part mounted on the stop member. The protrusion may take the shape of a flap extending transversely from the central portion of the stop member as a portion of the strip, or may be formed by punching or similar techniques to cause material of the strip-shaped stop member to protrude from the stop member.

In an embodiment of the kit of parts or support, the holes of the support member each have a length dimension greater than a width dimension thereof, wherein the width direction extends parallel to the longitudinal axis of the support member, and wherein the length dimension extends tangentially to the support member in a plane at right angles to the longitudinal axis of the support member.

Advantageously, the shape of the holes is adapted to a cross-sectional shape of the body end portions of the stop member, so as to allow the body end portions to pass with a small clearance.

With the strip-shaped stop member, the holes in the support member can be quite small, and in particular have a quite small dimension as seen in the direction of the longitudinal axis of the support member. Hereby, any underlapping of guts (i.e., an edge or fold of the guts getting stuck against an edge of the hole) when sliding the guts on or off the support member is prevented to a large extent. Preferably, at least one of the holes at least partly has a rectangular shape, a racetrack shape, or an elliptical shape. In particular, an at least partly elliptical (or oval) shape performs well in terms of preventing underlapping.

In an embodiment of the kit of parts or support, the support member comprises two opposite end sections each having an open end, and two stop members, one for each end section.

Advantageously, the support member is made symmetrical with respect to a centre thereof, so that an orientation of the support during use, i.e. for assembling the support member and stop members, does not play a role. In practice, however, an orientation of the support during mounting the support with one end on a stuffing horn, with the aim of transferring the guts stored in overlapping fashion on the support to a stuffing horn, does play a role. For this reason, a stop member mounted in one end section of the support member may have a differentiating feature from a stop member mounted in an opposite end section. The differentiating feature may be a different colour, shape, size, etc.

In a third aspect, the invention provides a method of assembling a support for supporting a shirred gut casing. The assembling method comprises: providing a tubular support member having a longitudinal axis, and an end section having an open end, wherein the end section of the support member is provided with two diametrically opposed holes; and providing a strip-shaped stop member made from a flexible resilient material, wherein the stop member is separate from the support member, and comprises an elongate body portion having two opposite body end portions. The body portion may comprise a broadened central portion, whereby a width of the stop member at the central portion thereof is greater than a chord of a dimension of the holes in a tangential direction of the end section of the support member. Alternatively or additionally, the body portion may comprise a thickened central portion, whereby a thickness of the stop member at the central portion thereof is greater than a dimension of the holes in a longitudinal direction of the end section of the support member. The assembling method further comprises a first step of bending the stop member at the central portion thereof, thereby bringing the body end portions of the stop member towards each other. In a subsequent step, the method comprises inserting the body end portions of the stop member into the open end of the end section of the support member. In a final step, the method comprises moving one of the body end portions of the stop member through one of the holes of the support member, and move the other one of the body end portions of the stop member through the other one of the holes of the support member, whereby the respective body end portions of the stop member protrude oppositely from the support member.

In a fourth aspect, the invention provides a method of transferring a shirred gut casing from a support to a stuffing horn of a sausage manufacturing machine. The support comprises: a tubular support member having a longitudinal axis, and an end section having an open end, wherein the end section of the support member is provided with two diametrically opposed holes; and a strip-shaped stop member made from a flexible resilient material, wherein the stop member comprises an elongate body portion having two opposite body end portions, the stop member extending through both holes of the end section of the support member. The body portion may comprise a broadened central portion, whereby a width of the stop member at the central portion thereof is greater than a chord of a dimension of the holes in a tangential direction of the end section of the support member. Alternatively or additionally, the body portion may comprise a thickened central portion, whereby a thickness of the stop member at the central portion thereof is greater than a dimension of the holes in a longitudinal direction of the end section of the support member. The transferring method comprises a first step of providing at least one shirred gut casing held on the support member by at least one stop member. In a subsequent step, the transferring method comprises moving the open end of the end section of the support member over an end of the stuffing horn, thereby inserting the end of the stuffing horn into the end section of the support member. In a subsequent step, the transferring method comprises moving the support member further over the end of the stuffing horn to cause the end of the stuffing horn to move the central portion of the stop member away from the open end of the support member, thereby drawing the body end portions of the stop member through the holes of the end section of the support member into the interior of support member. In a subsequent step, the transferring method comprises transferring the gut casing from the support member to the stuffing horn. In a final step, the transferring method comprises withdrawing the support member from the stuffing horn, whereby the stop member remains held by the resilience thereof inside the support member.

Thus, the mere operation of sliding an end section of the support member on the stuffing horn causes the (end portions of the) stop member to be moved to the interior of the support member. Here, the stop member is bent or folded, whereby at least the end portions thereof exert a force on the inner surface of the support member.

Accordingly, the stopping provision at the end section may be effectively completely removed in a simple, quick and reliable manner. This greatly improves the process of transferring the gut or guts stored on the support, from the support to the stuffing horn, by eliminating any handling of the stopping provision by an operator. Thus, the total time needed for the transfer process is shortened.

There is no risk of losing the stop member, since it is, due to its resilience, safely clamped inside the support member, where a movement of the stop member in a direction of the longitudinal direction of the support member is prevented by friction between the inner surface of the support member, and the stop member.

As an extra precautionary measure, the stop member may be made from a material detectable by a material detector, in particular made from metal being detectable by a metal detector. Although it is virtually impossible for the stop member to become lost from the support member, food safety regulations can be complied with better in this way.

These and other aspects of the invention will be more readily appreciated as the same becomes better understood by reference to the following detailed description and considered in connection with the accompanying drawings in which like reference symbols designate like parts.

### BRIEF DESCRIPTION OF THE DRAWINGS

Figure 1A depicts a longitudinal sectional view of an embodiment of a tubular support member.
Figure 1B depicts a cross-sectional view of the support member of Figure 1A according to view IB as indicated in Figure 1A.
Figure 2A depicts a perspective front view of an embodiment of a stop member.
Figure 2B depicts a full front view of the stop member of Figure 2A according to view IIB as indicated in Figure 2A.
Figure 2C depicts a perspective back view of the stop member of Figure 2A according to view IIC as indicated in Figure 2A.
Figure 2D depicts a side view of the stop member of Figure 2A according to view IID as indicated in Figure 2B.
Figure 2E depicts a top view of the stop member of Figure 2A.
Figures 3A, 3B and 3C illustrate different stages during assembly of a stop member and a support member.
Figure 3D shows the stage of insertion of the stop member into the support member according to Figure 3C according to view IIID as indicated in Figure 3C.
Figures 4A, 4B, 4C and 4D depict side views of a support member, illustrating different shapes of holes in an end section of the support member.
Figure 5 shows a perspective view of a support carrying one or more shirred gut casings.
Figures 6A and 6B illustrate different stages during insertion of a stuffing horn into a support.

### DETAILED DESCRIPTION OF EMBODIMENTS

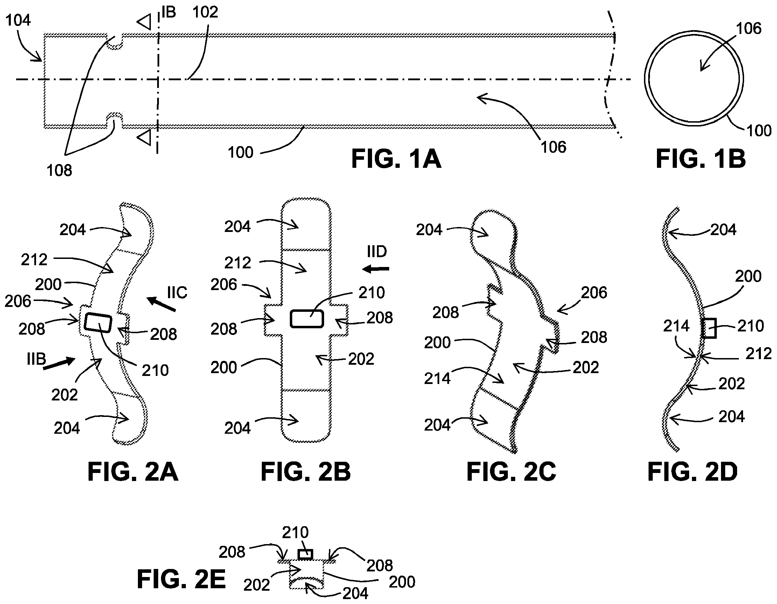

Figures 1A and 1B depict an embodiment of a support member 100 being generally tubular shaped. The support member 100 has a longitudinal axis 102, an open end 104, and an interior 106. The support member 100 may also be referred to as a pipe. The support member 100 comprises an end section provided with two diametrically opposed holes 108. The support member may comprises another end section provided with two diametrically opposed holes 108.

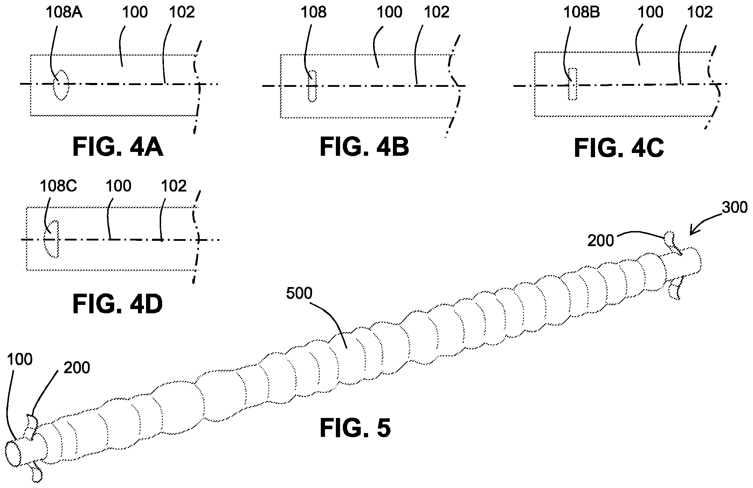

As shown in Figure 4B, the holes 108 are racetrack-shaped. Other shapes of the holes are also possible. As shown in Figure 4A, a hole in the end section of the support member 100 may be an oval-shaped or elliptical hole 108A. As shown in Figure 4C, a hole in the end section of the support member 100 may be a rectangular-shaped hole 108B. As shown in Figure 4D, a hole in the end section of the support member 100 may be a partly rectangular-shaped and partly oval-shaped hole 108C. In general, the holes 108, 108A, 108B, 108C of the support member 100 each have a length dimension greater than a width dimension thereof, wherein the width direction extends parallel to the longitudinal axis 102 of the support member 100, and wherein the length dimension extends tangentially to the support member 100 in a plane at right angles to the longitudinal axis 102 of the support member 100.

Figures 2A to 2E show a strip-shaped stop member 200 made from a flexible resilient material, such as a plastic material or metal. Due to the flexibility and resiliency of the material of the stop member 200, the stop member 200 may be bent or folded from an original shape (as depicted) to a bent or folded shape by exerting a force on the stop member 200, whereas the stop member 200 will restore its original shape upon removal of the force.

The stop member 200 is separate from the support member 100, and comprises an elongate body portion 202 having two opposite end portions 204. Ends of the end portions 204 may be rounded. The body portion 202 has a length, a width, and a thickness, wherein the length is (substantially) greater than the width, and the width is (substantially) greater than the thickness.

The body portion 202 comprises a broadened central portion 206. That is, the width of the body portion 202 is the same, or substantially the same along most of the length of the body portion 202, with the exception of the central portion 206 which is broader than the rest of the body portion 202. The broadened central portion 206 is formed by two protrusions, in the embodiment shown as flaps 208, extending or protruding transversely from the body portion 202. Instead of two protrusions or flaps 208, only one protrusion or flap at one side of the body portion 202 may be provided.

Alternatively or additionally, the body portion 202 may comprise a thickened central portion 206. That is, the thickness of the body portion 202 is the same, or substantially the same along most of the length of the body portion 202, with the exception of the central portion 206 which, at least partly, is thicker than the rest of the body portion 202. The thickened central portion 206 is formed by at least one protrusion 210 , in the embodiment diagrammatically shown, such as a tooth, cam, ridge, crest or other suitably shaped protrusion 210. The protrusion 210 may be made by preforming, punching or plastically deforming the stop member material, or by assembling a protrusion member on the stop member 200. The stop member 200 may comprises one or more protrusions 210 at first side surface 212, as shown, and/or one or more protrusions 210 at second side surface 214 opposite first side surface 212.

The body end portions 204 of the stop member 200 at the first side surface 212 side each have a concave bent shape, as seen with respect to a bending line facing the first surface side 212, the bending line being parallel to a width direction of the stop member 200. The central portion 206 of the stop member 200 at the first side surface 212 side has a convex bent shape with respect to said bending line. In other embodiments, the body end portions 204 and/or the central portion 206 may have a straight shape.

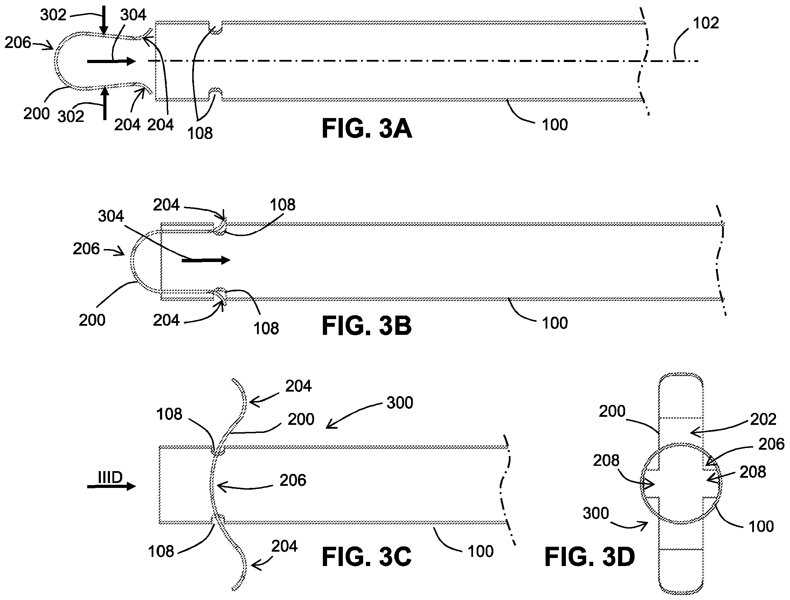

Figures 3A to 3C illustrate how a stop member 200 and a support member 100 are assembled to form a support 300.

As illustrated in Figure 3A, the stop member 200 is bent or folded at the central portion 206, bringing the body end portions 204 of the stop member 200 towards each other by exerting forces on the stop member 200 in the direction of arrows 302. Hereby, the body end portions 204 are brought to a mutual distance sufficient for them to be inserted into the open end of the end section of the support member 100 in the direction of arrow 304, parallel to longitudinal axis 102 of the support member 100. Once the body end portions 204 are inside the support member 100, the forces in the direction of arrows 302 may be removed, whereby the stop member relaxes towards its original shape, and the free ends of the body end portions 204 come to rest against the inner surface of the support member 100.

Upon further moving the stop member 200 in the direction of arrow 304, the body end portions 204 of the stop member 200 move into and through the holes 108 of the support member 100. Here, the bent shape of the body end portions 204 aids the body end portions 204 in snapping into the holes 108 due to the resilient nature of the stop member 200 (as illustrated in Figure 3B), and being guided through the holes 108 along an edge of the holes facing away from the end of the support member 100.

Further insertion of the stop member 200 in the direction of arrow 304 into the support member 100 causes the respective body end portions 204 of the stop member 200 to protrude oppositely from the support member (as illustrated in Figure 3C).

As shown in Figure 3D, with an appropriate dimensioning of the stop member 200, the stop member 200 in its relaxed condition is securely connected to the support member 100 to form the support 300. A width of the stop member 200 at the central portion 206 thereof is greater than a chord of a dimension of the holes 108 in a tangential direction of the end section of the support member 100. Preferably, a width of broadened central portion 206 of the body portion 202 is at least equal to an inner diameter of the support member 100. If the width of the broadened central portion 206 is slightly greater than the inner diameter of the support member 100, the edge regions of the broadened central portion 206 in contact with the inner side of the support member 100 slightly deform, whereby a high friction force is obtained at the deformation between the broadened central portion 206 and the support member 100. In other words, the broadened central portion 206 is clamped in the support member. This will prevent to a great extent that the stop member 200 moves in a longitudinal direction of the support member 100, in particular when no other forces are exerted on the stop member 200, and even in case of exerting normal forces on the stop member 200 during handling and transport. In case of a thickened central portion 206, a thickness of the stop member 200 at the central portion 206 thereof is greater than a dimension of the holes 108 in a direction of the longitudinal axis 102 of the support member 100.

Figure 5 shows one or more shirred guts, or gut casings 500 mounted on the support 300. Here, the support member 100 of the support 300 is provided with stop members 200 at both end sections of the support member 100.

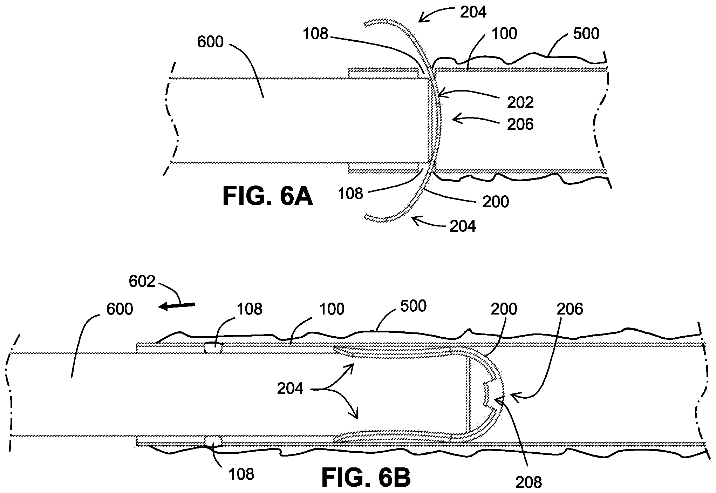

Figures 6A and 6B illustrate a method of transferring a shirred gut casing 500 from a support 300 to a stuffing horn of a sausage manufacturing machine.

As illustrated in Figure 6A, an open end of one of the two end sections of the support member 100 is slid over an end of a stuffing horn 600, thereby inserting the end of the stuffing horn 600 into the end section of the support member 100. The end of the stuffing horn 600 thereby will come to push against the stop member at the central portion 206 of the body portion 202 of the stop member 200.

As illustrated in Figures 6A and 6B, the support member is further moved over the end of the stuffing horn 600 to cause the end of the stuffing horn 600 to move the central portion 206 of the stop member 200 away from the open end of the support member 100, thereby drawing the body end portions 204 of the stop member 200 through the holes 108 of the end section of the support member 100 into the interior of support member 100. The stop member ends up being bent or folded against the inner surface of the support member 100, with the body end portions 204 of the stop member 200 located between the outer surface of the stuffing horn 600 and the inner surface of the support member 100. As a result, the stopping provision previously provided by the stop member 200 is made ineffective, and the gut 500 may be slid in the direction of arrow 602 from the support member 100 over the holes 108 onto the stuffing horn 600, whereby the gut is transferred from the support member 100 to the stuffing horn 600.

In the position of the stop member as shown in Figure 6B, a friction between (a part of the second side surface 214 of) the stop member 200 and the inner surface of the support member 100 is substantially greater than a friction between (a part of the first side surface 212 of) the stop member 200 and the outer surface of the stuffing horn 600. Therefore, when the support member 100 is withdrawn from the stuffing horn 600, the stop member 200 remains held inside the support member 100 by the friction generated by the resilience of the stop member 200. Furthermore, as explained above, when the broadened central portion 206 of the stop member 200 has a width which is greater than the inner diameter of the support member 100, the stop member being folded and stored inside the support member 100, is kept firmly in place by the deformation of the edge regions of the broadened central portion 206 at the inner side of the support member 100, even if in an unforeseen circumstance the stop member 200 would be drawn inside the support member 100 with both end portions 204 extending oppositely and substantially parallel to the longitudinal axis 102 of the support member 100 (i.e. the stop member being located inside the support member 100 in a stretched, relaxed condition).

At the other end section (not shown) of the support member 200, the stop member 200 may be retained. Once the gut 500 is completely transferred from the support member 100 to the stuffing horn 600, the support 300 having one stop member 200 left may be discarded or reused.

As explained in detail above, a support for supporting a shirred gut casing comprises a tubular support member and at least one stop member. An end section of the support member is provided with two diametrically opposed holes. The separate stop member is strip-shaped, is made from a flexible resilient material, and extends through both holes of the support member. The stop member comprises a broadened or thickened central portion to prevent the stop member from moving through the holes.

As required, detailed embodiments of the present invention are disclosed herein. However, it is to be understood that the disclosed embodiments are merely exemplary of the invention, which can be embodied in various forms without departing from the scope of the appended claims.

## Claims

1. A kit of parts for supporting a shirred gut casing, the kit of parts comprising:
a tubular support member (100) having a longitudinal axis (102), and at least one end section having an open end (104),
**characterized in that**
the end section of the support member is provided with two diametrically opposed holes (108); and
the kit of parts further comprises a stop member (200) being substantially strip-shaped, being made from a flexible resilient material, and comprising an elongate body portion (202) having two opposite body end portions (204), wherein:
the body portion comprises a broadened central portion (206), whereby a width of the stop member at the central portion thereof is greater than a chord of a dimension of the holes in a tangential direction of the end section of the support member, and/or
the body portion comprises a thickened central portion, whereby a thickness of the stop member at the central portion thereof is greater than a dimension of the holes in a longitudinal direction of the end section of the support member.

2. The kit of parts according to claim 1, wherein the holes (108) of the support member (100) each have a length dimension greater than a width dimension thereof, wherein the width direction extends parallel to the longitudinal axis (104) of the support member, and wherein the length dimension extends tangentially to the support member in a plane at right angles to the longitudinal axis of the support member.

3. The kit of parts according to claim 1 or 2, wherein at least one of the holes (108; 108A; 108B) at least partly has a rectangular shape, a racetrack shape, or an elliptical shape.

4. The kit of parts according to any of claims 1 to 3, wherein the stop member (200) has a first side surface (212), and wherein the body end portions (204) of the stop member at the first side surface side each have a concave bent shape, as seen with respect to a bending line facing the first surface side, the bending line being parallel to a width direction of the stop member (200).

5. The kit of parts according to claim 4, wherein the central portion (206) of the stop member (200) at the first side surface (212) side has a convex bent shape with respect to the bending line.

6. The kit of parts according to any one of claims 1 to 5, wherein the broadened and/or thickened central portion (206) of the stop member (200) is formed by at least one transverse protrusion (208) of the body portion (202).

7. The kit of parts according to any one of claims 1 to 6, wherein the support member (100) comprises two opposite end sections each having an open end (104), and wherein the kit of parts comprises two stop members (200), one for each end section.

8. A support (300) for supporting a shirred gut casing, the support comprising a kit of parts according to any one of the preceding claims, wherein each stop member (200) is separate from the support member (100), and extends through both holes (108) of the corresponding end section of the support member.

9. A method of assembling a support (300) for supporting a shirred gut casing, the assembling method comprising:
providing a tubular support member (100) having a longitudinal axis (102), and an end section having an open end (104),
**characterized in that**
the end section of the support member is provided with two diametrically opposed holes (108); and
the assembling method further comprises:
providing a strip-shaped stop member (200) made from a flexible resilient material, wherein the stop member is separate from the support member, extends through both holes of the end section of the support member, and comprises an elongate body portion (202) having two opposite body end portions (204),
wherein the body portion comprises a broadened central portion (206), whereby a width of the stop member at the central portion thereof is greater than a chord of a dimension of the holes in a tangential direction of the end section of the support member, and/or
wherein the body portion comprises a thickened central portion (206), whereby a thickness of the stop member at the central portion thereof is greater than a dimension of the holes in a longitudinal direction of the end section of the support member,
wherein the assembling method further comprises:
bending the stop member at the central portion thereof, thereby bringing the body end portions of the stop member towards each other;
inserting the body end portions of the stop member into the open end of the end section of the support member;
moving one of the end portions of the stop member through one of the holes of the support member, and move the other one of the body end portions of the stop member through the other one of the holes of the support member, whereby the respective body end portions of the stop member protrude oppositely from the support member.

10. A method of transferring a gut casing (500) from a support (300) to a stuffing horn (600) of a sausage manufacturing machine, the support comprising:
a tubular support member (100) having a longitudinal axis (102), and an end section having an open end (104),
**characterized in that**
the end section of the support member is provided with two diametrically opposed holes (108); and
the support further comprises a strip-shaped stop member (200) made from a flexible resilient material, wherein the stop member comprises an elongate body portion (202) having two opposite body end portions (204), the stop member being separate from the support member and extending through both holes of the end section of the support member,
wherein the body portion comprises a broadened central portion (206), whereby a width of the stop member at the central portion thereof is greater than a chord of a dimension of the holes in a tangential direction of the end section of the support member, and/or
wherein the body portion comprises a thickened central portion (206), whereby a thickness of the stop member at the central portion thereof is greater than a dimension of the holes in a longitudinal direction of the end section of the support member,
wherein the transferring method comprises:
providing at least one shirred gut casing held on the support member by at least one stop member;
moving the open end of the end section of the support member over an end of the stuffing horn, thereby inserting the end of the stuffing horn into the end section of the support member;
moving the support member further over the end of the stuffing horn to cause the end of the stuffing horn to move the central portion of the stop member away from the open end of the support member, thereby drawing the body end portions of the stop member through the holes of the end section of the support member into the interior of support member;
transferring the gut casing from the support member to the stuffing horn; and
withdrawing the support member from the stuffing horn, whereby the stop member remains held by the resilience thereof inside the support member.

## Patentansprüche

1. Teilesatz zum Tragen einer gerafften Darmhülle, wobei der Teilesatz Folgendes umfasst:
ein röhrenförmiges Tragelement (100) mit einer Längsachse (102) und zumindest einem Endabschnitt mit einem offenen Ende (104),
**dadurch gekennzeichnet, dass**
der Endabschnitt des Tragelements mit zwei einander diametral gegenüberliegenden Ausnehmungen (108) versehen ist; und
der Teilesatz des Weiteren ein Anschlagelement (200) umfasst, das im Wesentlichen streifenförmig ist, aus einem flexiblen, elastischen Material hergestellt ist und einen länglichen Körperabschnitt (202) mit zwei einander gegenüberliegenden Körperendabschnitten (204) umfasst, wobei:
der Körperabschnitt einen verbreiterten mittleren Abschnitt (206) umfasst, wodurch eine Breite des Anschlagelements an seinem mittleren Abschnitt größer ist als eine Sehne einer Ausdehnung der Ausnehmungen in einer tangentialen Richtung des Endabschnitts des Tragelements, und/oder
der Körperabschnitt einen verdickten mittleren Abschnitt umfasst, wodurch eine Dicke des Anschlagelements an seinem mittleren Abschnitt größer ist als eine Ausdehnung der Ausnehmungen in einer Längsrichtung des Endabschnitts des Tragelements.

2. Teilesatz nach Anspruch 1, wobei die Ausnehmungen (108) des Tragelements (100) jeweils eine Längenausdehnung aufweisen, die größer als eine Breitenausdehnung desselben ist, wobei sich die Breitenrichtung parallel zu der Längsachse (104) des Tragelements erstreckt, und wobei sich die Längenausdehnung tangential zu dem Tragelement in einer Ebene rechtwinklig zu der Längsachse des Tragelements erstreckt.

3. Teilesatz nach Anspruch 1 oder 2, wobei zumindest eine der Ausnehmungen (108; 108A; 108B) zumindest teilweise eine rechteckige Form, die Form einer Rennbahn oder eine elliptische Form aufweist.

4. Teilesatz nach einem der Ansprüche 1 bis 3, wobei das Anschlagelement (200) eine erste Seitenfläche (212) aufweist, und wobei die Körperendabschnitte (204) des Anschlagelements an der ersten Seitenflächenseite jeweils eine konkav gebogene Form aufweisen, betrachtet in Bezug auf eine Biegelinie, die der ersten Seitenflächenseite zugewandt ist, wobei die Biegelinie parallel zu einer Breitenrichtung des Anschlagelements (200) verläuft.

5. Teilesatz nach Anspruch 4, wobei der mittlere Teil (206) des Anschlagelements (200) an der Seite der ersten Seitenfläche (212) eine konvexe Biegeform in Bezug auf die Biegelinie aufweist.

6. Teilesatz nach einem der Ansprüche 1 bis 5, wobei der verbreiterte und/oder verdickte mittlere Abschnitt (206) des Anschlagelements (200) durch zumindest einen quer verlaufenden Vorsprung (208) des Körperabschnitts (202) gebildet ist.

7. Teilesatz nach einem der Ansprüche 1 bis 6, wobei das Tragelement (100) zwei einander gegenüberliegende Endabschnitte umfasst, die jeweils ein offenes Ende (104) aufweisen, und wobei der Teilesatz zwei Anschlagelemente (200) umfasst, eines für jeden Endabschnitt.

8. Träger (300) zum Tragen einer gerafften Darmhülle, wobei der Träger einen Satz von Teilen nach einem der vorangegangenen Ansprüche umfasst, wobei jedes Anschlagelement (200) von dem Tragelement (100) getrennt ist und sich durch beide Ausnehmungen (108) des entsprechenden Endabschnitts des Tragelements erstreckt.

9. Verfahren zum Zusammenbau eines Trägers (300) zum Tragen einer gerafften Darmhülle, wobei das Verfahren zum Zusammenbau Folgendes umfasst:
Bereitstellen eines rohrförmigen Tragelements (100) mit einer Längsachse (102) und einem Endabschnitt mit einem offenen Ende (104),
**dadurch gekennzeichnet, dass**
der Endabschnitt des Tragelements mit zwei einander diametral gegenüberliegenden Ausnehmungen (108) versehen ist; und
das Verfahren zum Zusammenbau des Weiteren umfasst:
Bereitstellen eines streifenförmigen Anschlagelements (200), das aus einem flexiblen, elastischen Material hergestellt ist, wobei das Anschlagelement von dem Tragelement getrennt ist, sich durch beide Ausnehmungen des Endabschnitts des Tragelements erstreckt, und einen länglichen Körperabschnitt (202) mit zwei einander gegenüberliegenden Körperendabschnitten (204) umfasst,
wobei der Körperabschnitt einen verbreiterten mittleren Abschnitt (206) umfasst, wodurch eine Breite des Anschlagelements an seinem mittleren Abschnitt größer ist als eine Sehne einer Ausdehnung der Ausnehmungen in einer tangentialen Richtung des Endabschnitts des Tragelements, und/oder
der Körperabschnitt einen verdickten mittleren Abschnitt (206) umfasst, wodurch eine Dicke des Anschlagelements an seinem mittleren Abschnitt größer ist als eine Ausdehnung der Ausnehmungen in einer Längsrichtung des Endabschnitts des Tragelements,
wobei das Verfahren zum Zusammenbau des Weiteren umfasst:
Biegen des Anschlagelements an seinem mittleren Abschnitt, wodurch die Körperendabschnitte des Anschlagelements zueinander gebracht werden;
Einführen der Körperendabschnitte des Anschlagelements in das offene Ende des Endabschnitts des Tragelements;
Bewegen eines der Endabschnitte des Anschlagelements durch eine der Ausnehmungen des Tragelements und Bewegen des anderen der Körperendabschnitte des Anschlagelements durch die andere der Ausnehmungen des Tragelements, wodurch die jeweiligen Körperendabschnitte des Anschlagelements einander gegenüberliegend aus dem Tragelement herausragen.

10. Verfahren zum Überführen einer Darmhülle (500) von einem Träger (300) zu einem Füllhorn (600) eines Geräts zur Wurstherstellung, wobei der Träger Folgendes umfasst:
ein röhrenförmiges Tragelement (100) mit einer Längsachse (102) und zumindest einem Endabschnitt mit einem offenen Ende (104),
**dadurch gekennzeichnet, dass**
der Endabschnitt des Tragelements mit zwei einander diametral gegenüberliegenden Ausnehmungen (108) versehen ist; und
der Träger des Weiteren ein streifenförmiges Anschlagelement (200) umfasst, das aus einem flexiblen, elastischen Material hergestellt ist und einen länglichen Körperabschnitt (202) mit zwei einander gegenüberliegenden Körperendabschnitten (204) umfasst, wobei das Anschlagelement von dem Tragelement getrennt ist und sich durch beide Ausnehmungen des Endabschnitts des Tragelements erstreckt;
wobei der Körperabschnitt einen verbreiterten mittleren Abschnitt (206) umfasst, wodurch eine Breite des Anschlagelements an seinem mittleren Abschnitt größer ist als eine Sehne einer Ausdehnung der Ausnehmungen in einer tangentialen Richtung des Endabschnitts des Tragelements, und/oder
wobei der Körperabschnitt einen verdickten mittleren Abschnitt (206) umfasst, wodurch eine Dicke des Anschlagelements an seinem mittleren Abschnitt größer ist als eine Ausdehnung der Ausnehmungen in einer Längsrichtung des Endabschnitts des Tragelements,
wobei das Verfahren zum Überführen umfasst:
Bereitstellen zumindest einer gerafften Darmhülle, die durch zumindest ein Anschlagelement auf dem Tragelement gehalten wird;
Bewegen des offenen Endes des Endabschnitts des Tragelements über ein Ende des Füllhorns, wodurch das Ende des Füllhorns in den Endabschnitt des Tragelements eingeführt wird;
Bewegen des Tragelements weiter über das Ende des Füllhorns, um zu bewirken, dass das Ende des Füllhorns den mittleren Abschnitt des Anschlagelements von dem offenen Ende des Tragelements wegbewegt, wodurch die Körperendabschnitte des Anschlagelements durch die Ausnehmungen des Endabschnitts des Tragelements in das Innere des Tragelements gezogen werden;
Überführen der Darmhülle von dem Tragelement zu dem Füllhorn; und
Herausziehen des Tragelements aus dem Füllhorn, wodurch das Anschlagelement durch seine Elastizität im Inneren des Tragelements gehalten bleibt.

## Revendications

1. Kit de pièces pour supporter un boyau plissé, le kit de pièces comprenant :
un élément de support tubulaire (100) ayant un axe longitudinal (102), et au moins une section d'extrémité ayant une extrémité ouverte (104),
**caractérisé en ce que**
la section d'extrémité de l'élément de support est pourvue de deux trous diamétralement opposés (108) ; et
le kit de pièces comprend en outre un élément d'arrêt (200) ayant sensiblement la forme d'une bande, étant fabriqué à partir d'un matériau élastique flexible, et comprenant une partie de corps allongée (202) ayant deux parties d'extrémité de corps (204) opposées, dans lequel :
la partie de corps comprend une partie centrale élargie (206), de sorte qu'une largeur de l'élément d'arrêt au niveau de sa partie centrale est supérieure à une corde d'une dimension des trous dans une direction tangentielle de la section d'extrémité de l'élément de support, et/ou
la partie de corps comprend une partie centrale épaissie, de sorte que l'épaisseur de l'élément d'arrêt au niveau de sa partie centrale est supérieure à la dimension des trous dans une direction longitudinale de la section d'extrémité de l'élément de support.

2. Kit de pièces selon la revendication 1, dans lequel les trous (108) de l'élément de support (100) ont chacun une dimension en longueur supérieure à une dimension en largeur de ceux-ci, dans lequel la direction de la largeur s'étend parallèlement à l'axe longitudinal (104) de l'élément de support, et dans lequel la dimension en longueur s'étend tangentiellement à l'élément de support dans un plan à angle droit par rapport à l'axe longitudinal de l'élément de support.

3. Kit de pièces selon la revendication 1 ou 2, dans lequel au moins l'un des trous (108 ; 108A ; 108B) a au moins partiellement une forme rectangulaire, une forme de champ de course, ou une forme elliptique.

4. Kit de pièces selon l'une quelconque des revendications 1 à 3, dans lequel l'élément d'arrêt (200) a une première surface latérale (212), et dans lequel les parties d'extrémité de corps (204) de l'élément d'arrêt au niveau du côté de la première surface latérale ont chacune une forme incurvée concave, comme vu par rapport à une ligne de pliage faisant face au côté de la première surface latérale, la ligne de pliage étant parallèle à une direction de largeur de l'élément d'arrêt (200).

5. Kit de pièces selon la revendication 4, dans lequel la partie centrale (206) de l'élément d'arrêt (200) du côté de la première surface latérale (212) a une forme courbée convexe par rapport à la ligne de pliage.

6. Kit de pièces selon l'une quelconque des revendications 1 à 5, dans lequel la partie centrale élargie et/ou épaissie (206) de l'élément d'arrêt (200) est formée par au moins une saillie transversale (208) de la partie de corps (202).

7. Kit de pièces selon l'une quelconque des revendications 1 à 6, dans lequel l'élément de support (100) comprend deux sections d'extrémité opposées ayant chacune une extrémité ouverte (104), et dans lequel le kit de pièces comprend deux éléments d'arrêt (200), un pour chaque section d'extrémité.

8. Support (300) pour supporter un boyau plissé, le support comprenant un kit de pièces selon l'une quelconque des revendications précédentes, dans lequel chaque élément d'arrêt (200) est séparé de l'élément de support (100), et s'étend à travers les deux trous (108) de la section d'extrémité correspondante de l'élément de support.

9. Procédé d'assemblage d'un support (300) destiné à supporter un boyau plissé, le procédé d'assemblage comprenant :
la fourniture d'un élément de support tubulaire (100) ayant un axe longitudinal (102), et une section d'extrémité ayant une extrémité ouverte (104),
**caractérisé en ce que**
la section d'extrémité de l'élément de support est pourvue de deux trous diamétralement opposés (108) ; et
le procédé d'assemblage comprend en outre
la fourniture d'un élément d'arrêt en forme de bande (200) fait d'un matériau élastique flexible, dans lequel l'élément d'arrêt est séparé de l'élément de support, s'étend à travers les deux trous de la section d'extrémité de l'élément de support, et comprend une partie de corps allongée (202) ayant deux parties d'extrémité de corps (204) opposées ;
dans lequel la partie de corps comprend une partie centrale élargie (206), de sorte qu'une largeur de l'élément d'arrêt au niveau de sa partie centrale est supérieure à une corde d'une dimension des trous dans une direction tangentielle de la section d'extrémité de l'élément de support, et/ou
dans lequel la partie de corps comprend une partie centrale épaissie (206), de sorte qu'une épaisseur de l'élément d'arrêt au niveau de sa partie centrale est supérieure à une dimension des trous dans une direction longitudinale de la section d'extrémité de l'élément de support,
dans lequel le procédé d'assemblage comprend en outre le pliage de l'élément d'arrêt au niveau de sa partie centrale, amenant ainsi les parties d'extrémité du corps de l'élément d'arrêt l'une vers l'autre ;
l'insertion des parties d'extrémité du corps de l'élément d'arrêt dans l'extrémité ouverte de la section d'extrémité de l'élément de support ;
le déplacement de l'une des parties d'extrémité de l'élément d'arrêt à travers l'un des trous de l'élément de support, et le déplacement de l'autre des parties d'extrémité de corps de l'élément d'arrêt à travers l'autre des trous de l'élément de support, de sorte que les parties d'extrémité de corps respectives de l'élément d'arrêt font saillie de manière opposée depuis l'élément de support.

10. Procédé de transfert d'un boyau (500) depuis un support (300) vers une corne de bourrage (600) d'une machine de fabrication de saucisses, le support comprenant :
un élément de support tubulaire (100) ayant un axe longitudinal (102), et une section d'extrémité ayant une extrémité ouverte (104),
**caractérisé en ce que**
la section d'extrémité de l'élément de support est pourvue de deux trous (108) diamétralement opposés ; et
le support comprend en outre un élément d'arrêt en forme de bande (200) fait d'un matériau élastique flexible, dans lequel l'élément d'arrêt comprend une partie de corps allongée (202) ayant deux parties d'extrémité de corps opposées (204), l'élément d'arrêt étant séparé de l'élément de support et s'étendant à travers les deux trous de la section d'extrémité de l'élément de support,
dans lequel la partie de corps comprend une partie centrale élargie (206), de sorte qu'une largeur de l'élément d'arrêt au niveau de sa partie centrale est supérieure à une corde d'une dimension des trous dans une direction tangentielle de la section d'extrémité de l'élément de support, et/ou
dans lequel la partie de corps comprend une partie centrale épaissie (206), de sorte qu'une épaisseur de l'élément d'arrêt au niveau de sa partie centrale est supérieure à une dimension des trous dans une direction longitudinale de la section d'extrémité de l'élément de support,
dans lequel le procédé de transfert comprend :
la fourniture d'au moins un boyau plissé maintenu sur l'élément de support par au moins un élément d'arrêt ;
le déplacement de l'extrémité ouverte de la section d'extrémité de l'élément de support sur une extrémité de la corne de bourrage, insérant ainsi l'extrémité de la corne de bourrage dans la section d'extrémité de l'élément de support ;
le déplacement de l'élément de support au-delà de l'extrémité de la corne de bourrage pour amener l'extrémité de la corne de bourrage à éloigner la partie centrale de l'élément d'arrêt de l'extrémité ouverte de l'élément de support, tirant ainsi les parties d'extrémité du corps de l'élément d'arrêt à travers les trous de la section d'extrémité de l'élément de support à l'intérieur de l'élément de support ;
le transfert du boyau de l'élément de support vers la corne de bourrage ; et
le retrait de l'élément de support de la corne de bourrage, l'élément d'arrêt restant ainsi maintenu par son élasticité à l'intérieur de l'élément de support.
